# EUROPEAN PATENT SPECIFICATION

(11) **EP 2 428 376 B1**
(45) Date of publication and mention of the grant of the patent: **21.08.2013**
(21) Application number: 10176674.9
(22) Date of filing: 14.09.2010
(51) Int. Cl.: B60H 1/00

(54) **Preassembled rear module of a cabin of a heavy vehicle.**
Vormontierte Heckmodule einer Kabine eines Schwerfahrzeugs
Module arrière pré-assemblé pour la cabine d'un véhicule lourd

(43) Date of publication of application: 14.03.2012
(73) Proprietor: CLAAS Tractor SAS, 78141 Velizy-Villacoublay (FR)
(72) Inventor: Bechade, Frédéric, 91460 Marcoussis (FR); Jardet, Gilles, 91380 Chili-Mazarin (FR); Gil Tierno, Frédéric, 92310 Sevres (FR); Hautefeuille, Nicolas, 92140 Clamart (FR); Matar, Michel, 78190 Trappes (FR)
(74) Representative: Casalonga, Axel

(56) References cited:
- EP-A1- 1 609 701
- WO-A1-2005/068256
- WO-A1-2010/049381
- GB-A- 2 392 423
- US-A- 5 385 378
- US-A1- 2006 211 358

## Description

The invention relates to the installations inside a cabin of a heavy vehicle such as a land tractor, and more particularly to a preassembled module comprising an air duct assembly and electronic device supporting means.

A tractor cabin heating, ventilating and air conditioning (HVAC) system is usually composed of an air processing unit stored in a compartment beneath the driver's seat. The air processing unit needs to be coupled to air supplying means in order to draw air inside the cabin after eventually conditioning it.

Such HVAC systems are already well known.

Document WO 2010/049381 describes a tractor cabin HVAC system comprising a blower which draws into the system fresh air incoming from air intake means. The air intake means located in the roof of the cabin are coupled to ducts mounted in the roof so as to direct the air drawn in by the intake means down the centre of one or more hollow adjacent pillars of the cabin to an air filter contained in a housing located between the adjacent pillars.

Such a system only provides fresh air from outside the cabin and does not integrate any recirculation air system.

Recirculation air enables to avoid having any possibly polluted air from outside entering the cabin. Making the HVAC system work with an only recirculation air supply can help heating the cabin with less energy as recirculation air has already been heated by the HVAC system and is therefore hotter than the external fresh air, or can help keeping the cabin cool with less energy by cooling down the recirculation air which has already been cooled down and which is therefore at a lower temperature than the external fresh air.

HVAC systems are also generally composed of many elements which have to be mounted in the cabin between the different electronic devices making the installation complex.
US 2006/211350 discloses a HVAC System according to the preamble of appending claim 1.

The present invention provides a solution to solve the different problems depicted before, by proposing a preassembled module comprising an air duct assembly and electronic device supporting means.

Thus, the invention proposes a vehicle such as a land tractor having a cabin with a heating, ventilating and air conditioning system according to claim 1.

According to a general feature of the invention, the cabin comprises an air duct assembly with at least a first air duct configured to be coupled to the intake of an air processing unit of the heating, ventilating and air conditioning system, and supporting means for attaching electronic devices, the air duct assembly and the supporting means being preassembled together so as to form one single module.

Thus, by preassembling the module all the elements of the module can be installed at the same time in a single operation in the cabin.

The supporting means may advantageously comprise two substantially flat portions for attaching said electronic devices on both sides of said air duct assembly

The electronic devices fixed on the supporting means can therefore be electrically coupled together before mounting said module in the cabin. Thus, cabling and fixing the electronic devices can be realized outside the heavy vehicle's cabin before mounting the module into the cabin, thus keeping only one step for installing the rear elements in the cabin.

Also, repairing one of the electronic devices can be easily done by removing the module and repairing the electronic device outside the cabin.

The module comprises two lateral flanges with pivot mounting means.

Each pivot means can advantageously comprise a supporting fork adapted to cooperate with a rod mounted inside the cabin.

Having pivot mounting means facilitates the installation of the module in the cabin. Indeed, to assemble the module into the cabin, the supporting forks have only to be brought into contact with an assembly point such as the rod on the cabin frame. Then the module is easily mounted by a rotating movement around a turning axis XX' passing through the supporting forks, until the upper portion of the module engages with a transversal beam of the cabin frame.

Advantageously, the module can comprise a second air duct configured to be coupled to the intake of the air processing unit.

Preferably, the module can comprise at least one securing means for securing said module to the cabin.

The module is advantageously mounted in the cabin so that said air duct assembly faces at least one slit in a floor wall of the cabin, the intake of the air processing unit facing the at least one slit on an opposite side of the floor wall than the air duct assembly.

Preferably, a gap is defined between the at least one slit and the lower part of the air duct assembly, and a separate air duct element mounted in the gap between the air duct assembly and the slit.

Advantageously, the separate air duct element is shaped as an open box and comprises an internal partition wall separating a first air duct portion from a second air duct portion, and comprises an intake opening emerging onto the second air duct.

The first and second air ducts can be at least partly formed respectively by the first air duct portion and the second air duct portion

Advantageously, the intake opening comprises a frame arranged to support air filtering means.

The separate air duct element being independent from the air duct assembly, it can be removed without removing the module, and therefore the filtering means can be easily changed if necessary. Removing the separate air duct element gives access to the HVAC underneath the seat without having to remove the module. Moreover, it allows to pivot the module, giving access to the electronic devices, and allowing the module to be removed.

The separate air duct element is attached to the floor wall of the cabin remaining free for lateral movement relative to the air duct assembly for enabling compensation of tolerances between the air duct assembly and the floor of the cabin.

Indeed, the air duct assembly is fixed to a transversal beam of the roll over protection structure while the floor cabin is fixed at the bottom part of the frame of the cabin. Therefore, lateral movements can happen between the air duct assembly and the floor cabin. The separate air duct element being independent in movement from the air duct assembly, it enables to compensate any movements between the cabin floor and the air duct assembly.

Preferably, the first air duct is configured so as to be coupled to fresh air intake means of the tractor for ducting fresh air from outside of the cabin to the air processing unit, and the second air duct is configured for ducting recirculation air from inside the cabin to the air processing unit.

Advantageously, the heavy vehicle such can comprise a three positions flap door mounted between the output of the air duct assembly and the input of the air processing unit for controlling the air supplied in the cabin by selecting an only fresh air supply mode, an only recirculation air supply mode, or a mixed air supply mode, the three position flap door being coupled between the output of the air duct assembly and the input of the air processing unit.

Preferably, the module is arranged as a rear module at the rear of the cabin.

Other advantages and characteristics of the invention will appear at the examination of the detailed description of a realization of the invention, being in no way limiting, and of the appended drawings on which:
- Figure 1 illustrates a cross sectional side view of a tractor cabin;
- Figure 2 illustrates a backside view of a module adapted to be mounted in the tractor cabin of figure 1;
- Figure 3 illustrates a front view of the module of figure 2 without the separate air duct element;
- Figures 4 and 5 illustrate a front view and a cross sectional view of a separate air duct element which can be mounted in the tractor cabin of figure 1;
- Figure 6 illustrates an inside view of a land tractor cabin comprising a module with the separate air duct element.

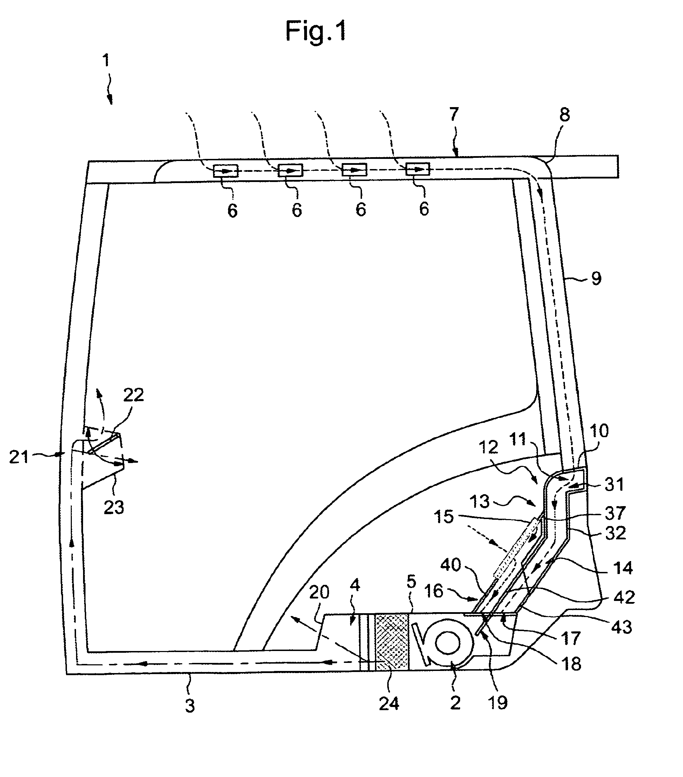

A cabin 1 of a land tractor is schematically illustrated on figures 1, 3 and 6.

The tractor cabin 1 comprises a heating, ventilating and air conditioning (HVAC) system composed of an HVAC unit 2 mounted on the floor 3 of the cabin 1. In this embodiment the HVAC unit 2 is mounted in a storage space 4 beneath the driver's seat defined by the floor 3 of the cabin 1 and an upper floor wall 5 on which the driver's seat can be fixed.

The tractor cabin 1 is provided with fresh air intakes 6. Two such intakes 6 dedicated to draw in fresh air from outside of the cabin 1 may for example be set in the sides or the roof 7 of the cabin 1 underneath the top surface of the roof 7 so as to prevent any entrance of rain into the fresh air intakes 6 and may also comprise air filtering means. By drawing air into the HVAC system via fresh air intakes 6 located in the roof 7 of the tractor cabin 1, the level of dust and dirt in the air drawn in is minimised.

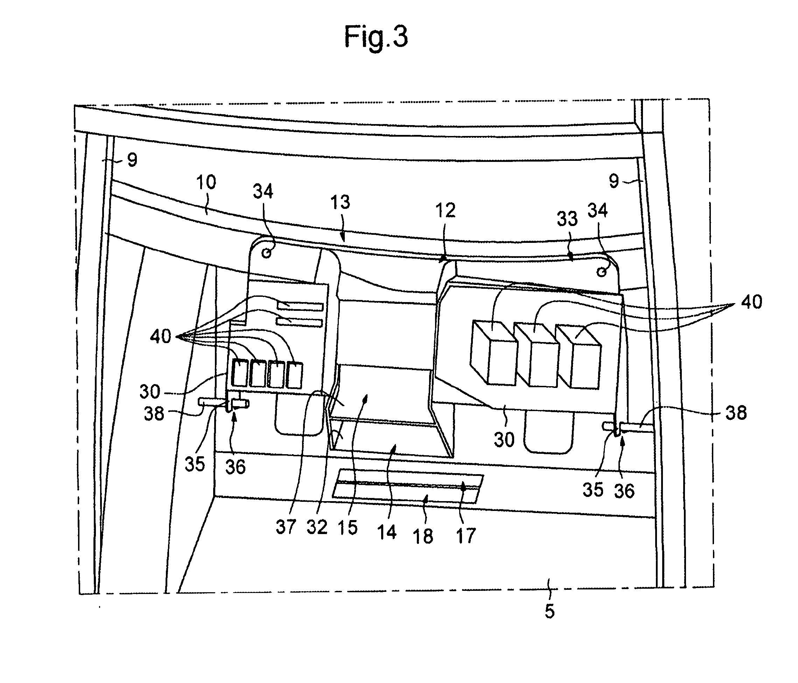

Thus, air is drawn through both fresh air intakes 6 into ducts 8 mounted in the roof 5. The ducts 8 on each side of the roof 5 are respectively coupled to one of the two hollow pillars 9 of the roll over protection structure (ROPS) of the cabin 1 fixed to the roof 7 on one side and rear of the cabin 1 (see figure 3).

The hollow pillars 9 are both connected to a transversal hollow beam 10 of the roll over protection structure. This transversal hollow beam 10 comprises an aperture 11 to let the fresh air flow out of it. A module 13 is coupled to the transversal hollow beam 10.

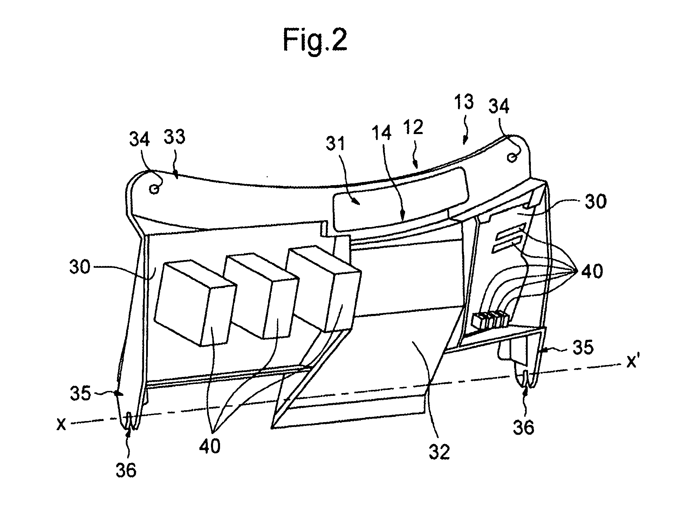

The module 13 comprises an air duct assembly 12 having an aperture 31, illustrated on figure 2, facing the transversal hollow beam aperture 11. As it can be seen on figure 1, the air duct assembly 12 comprises a first air duct 14 to draw the fresh air towards the HVAC unit 2, and a second air duct 15 dedicated to recycle the air inside the cabin and make a recirculation air flow.

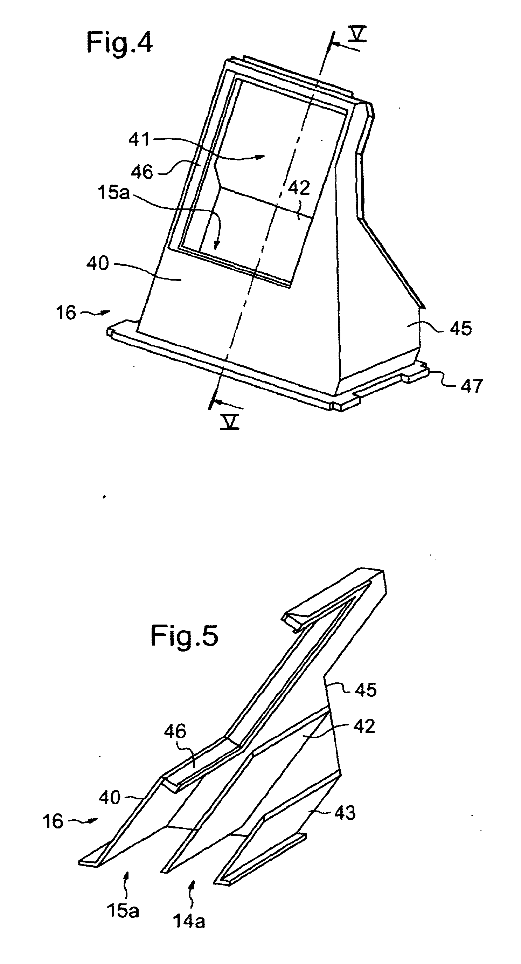

The air duct assembly 12 is completed by a separate air duct element 16 completing the second air duct 15 and continuing the first air duct 14. The separate air duct element 16, more precisely described in relation with figures 4 and 5, thus enables to couple the first and second air ducts 14 and 15 respectively to a first slit 17 and a second slit 18 realised in the upper floor wall 5.

A three positions flap door 19 is mounted in the storage space 4 facing the first and second slits 17 and 18 through which air is drawn out. This three positions flap door is coupled between the output of the air duct assembly 12, completed by the separate air duct element 16, and the input of the air processing unit 2, controlling therefore the air supplied in the cabin by selecting an only fresh air supply mode, an only recirculation air supply mode, or a mixed air supply mode.

A dashed line with arrows represents the circulation of the air drawn in from the fresh air intakes 4 to the HVAC unit 2 via the first air duct 14. A doted line with arrows represents the circulation of the recirculation air through the second air duct 15 to the HVAC unit 2. A mixed line with arrows represents the circulation of the air drawn into the cabin 1.

As illustrated on figure 1, the air is drawn into the cabin 1 through a first ventilating module 20 mounted at floor level under the driver's seat on between the upper floor portion 5 and the floor 3 of the cabin 1. The air is also drawn into the cabin 1 through a second ventilating module 21 mounted on the dashboard 23. The second ventilating module 21 can comprise a three positions flap door 22 enabling to blow air to the windscreen, towards the driver's face, or in both directions. The air is driven from the output of the HVAC unit 2 to the second ventilating module through the cabin frame.

The HVAC system can comprise, as illustrated in figure 1, conditioning means 24 allowing heating, refreshing or treating in any other way the air blown into the cabin 1.

Figure 2 illustrates a backside view of the module 13. The module 13 comprises the air duct assembly 12 and supporting means realised in a single assembly part. The supporting means comprise two supporting boards 30 relatively flat in order to attach electronic devices 40. The module 13 is realised so as to have the air duct assembly 12 in a central part and a supporting board 30 on each side of it.

The aperture 31 of the module 13 communicates with the first air duct 14. This aperture 31 is provided in the centre of an upper portion 33 of the module 13 in order to communicate with the aperture 11 of the transversal hollow beam 10 of the cabin frame, as shown on figure 1.

The first air duct 14 of the air duct assembly 12 is limited at the back by a backside plastic wall 32 extending from the bottom of the aperture 31 towards the hole 19 of the upper floor wall 5, and is limited at the front by a front plastic wall 37 extending from the top of the aperture 31 towards the hole 18 of the upper floor wall 5. In this example the two plastic walls 32 and 37 do not extend respectively down to the slits 17 and 18. They end before reaching the holes, these plastics walls being continued by those of the separate air duct element 16.

The upper portion 33 of the module 13 is slightly curved so as to be conformed to the transversal hollow beam 10 of the roll over protection structure of the cabin 1 on which the module will be fixed via two screws passing into two holes 34.

A plurality of electronic devices 40 can be fixed on the supporting boards 30 of the module 13 and the connexions can be realised before mounting the module 13 in the cabin 1.

The module 13 comprises two flanges 35, one on each side of the module 13. Each flange 35 has a supporting fork 36, defining a horizontal turning axis XX' facilitating the installation of the module 13 in the cabin 1.

Figure 3 illustrates a front view of the module 13 of figure 2 mounted in the cabin 1 without the separate air duct element 16. On this view, the structure of the first and second air ducts 14 and 15 can be observed.

As illustrated on this figure, to assemble the module 13, first each supporting forks 36 is brought into contact with rod 38 initially installed on the cabin frame. The module 13 is then easily mounted by a rotating movement around the horizontal turning axis XX' passing through the two supporting forks 36, until the upper portion 33 of the module 13 engages with the transversal hollow beam 10 of the cabin frame.

The output of the first air duct 14 can be seen on the bottom part of figure 3, the first air duct 14 being limited by the backside plastic wall 32 and the front plastic wall 37, and the input of the first air duct 14 corresponding to the aperture 31 at the back of the module 13 illustrated on figure 2.

The second air duct 15 is only partly realised by the air duct assembly 12 of the module 13. The module 13 is mounted in the cabin 1 so that the first air duct 14 of the air duct assembly 12 faces the first slit 17, while the second air duct 15 faces the second slit 18 the intake of the air processing unit facing the at least one slit on an opposite side of the upper floor wall than the air duct assembly.

A gap is therefore formed gap between the two slits 17 and 18 and the lower part of the air duct assembly 12. The separate air duct element 16 is then mounted in this gap between the air duct assembly 12 and the slits 17 and 18.

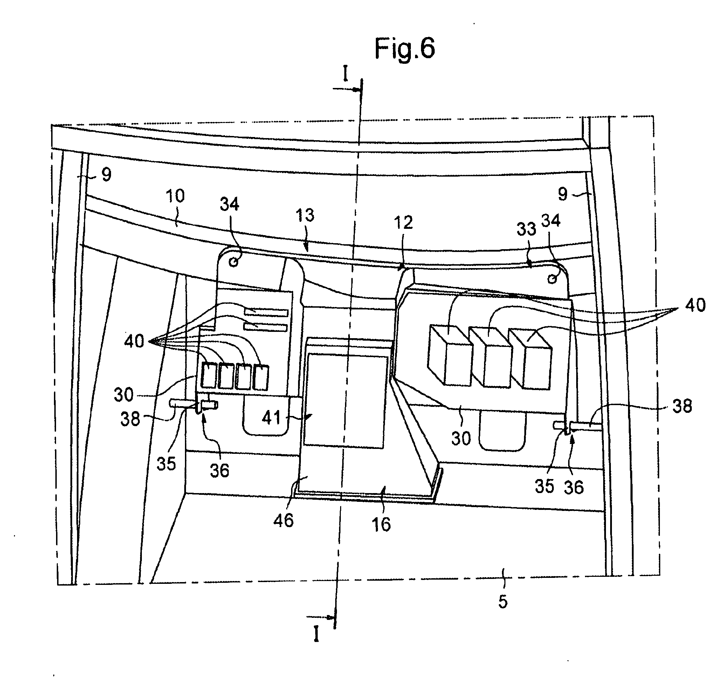

The second air duct 15 is thus completed by the separate air duct element 16 which is illustrated on figures 4 and 5, and which can be seen on figure 6 on which the module 13 is assembled with the air duct element 16.

Figures 4 and 5 respectively represent a front view and a cross sectional view of a separate air duct element 16.

The separate air duct element 16 is arranged in a box shaped. It comprises a front panel 40, a back panel 43, and two side panels 44 and 45. The separate air duct element also comprises an internal partition wall 42 separating a first air duct portion 14a from a second air duct portion 15a. The first air duct portion 14a, defined by the back panel 43 and the internal partition wall 42, completes the first air duct 14 between the air duct assembly 12 and the first slit 17. The second air duct portion 15a defined by the front panel 40 and the intermediate partition wall 42, completes the second air duct 15 between the between the air duct assembly 12 and the second slit 18.

The front panel 40 comprises an intake opening 41 emerging onto the second air duct portion 15a. This intake opening 41 is dedicated to draw the air of the cabin 1 into the second air duct 15.

The intake opening 41 comprises a frame 46 arranged to support air filtering means in order to filter the air drawn in the second air duct 15 before conditioning it and therefore reduce the degradation of the air processing unit 2.

The separate air duct element 16 comprises slides 47 in order to fix the separate air duct element 16 to the floor wall 5 of the cabin 1. The separate air duct element can thus be fixed to the cabin and remain free in sideways movement against the air duct assembly 12, and therefore keep compensation of tolerances between the air duct assembly 12 and the floor of the cabin (1).

Figure 6 represents an inside view of a land tractor cabin 1 in which has been installed a module 13.

The module 13, installed in the cabin 1, is fixed to the transversal hollow beam 10 thanks to screws passing through the holes 34 on the upper portion 33 of the module 13.

The module 13 comprises an air duct assembly 12 preassembled with supporting boards 30 in a single assembly part and completed with a separate air duct element 16.

The separate air duct element 16 is movable sideways against the air duct assembly 12 for enabling compensation of tolerances between the module 13 and the floor 3 of the cabin, and more particularly the upper floor wall 5. Indeed, the air duct assembly 12 is fixed to the hollow transversal beam 10 of the roll over protection structure while the floor cabin 3 is fixed at the bottom part of the frame of the cabin 1. Therefore, lateral movements can happen between the air duct assembly 12 and the floor cabin 3. The separate air duct element 16 being independent in movement from the air duct assembly 12, it enables to compensate any movements between the upper floor wall 5 and the air duct assembly 12.

The invention therefore provides an efficient preassembled module with facilitated installation having both fresh air and recirculation air ventilating systems, and integrating support means for electronic devices.

## Claims

1. Vehicle such as a land tractor having a cabin (1) with a heating, ventilating and air conditioning system, said cabin (1) comprises an air duct assembly (12) with at least a first air duct (14) configured to be coupled to the intake of an air processing unit (2) of the heating, ventilating and air conditioning system, and supporting means for attaching electronic devices (40), the air duct assembly (12) and the supporting means being preassembled together so as to form one single module (13), **characterized in that** said module (13) comprising two lateral flanges (35) with pivot mounting means.

2. Vehicle as claimed in claim 1, wherein said supporting means comprise two substantially flat portions (30) for attaching said electronic devices (40) arranged on both sides of said air duct assembly (12).

3. Vehicle as claimed in claims 1 or 2, wherein each pivot mounting means comprises a supporting fork (36) adapted to cooperate with a rod (38) mounted in the cabin (1).

4. Vehicle as claimed in claims 1 to 3, wherein the air duct assembly (12) comprises a second air duct (15) configured to be coupled to the intake of the air processing unit (2).

5. Vehicle as claimed in claims 1 to 4, wherein the module (13) comprises at least one securing means (34) for securing said module to the cabin (1).

6. Vehicle as claimed in claims 1 to 5, wherein said module is mounted in the cabin so that said air duct assembly (12) faces at least one slit (17, 18) provided in a floor wall (5) of the cabin (1), the intake of the air processing unit (2) facing the at least one slit (17, 18) on an opposite side of the floor wall (5) than the air duct assembly.

7. Vehicle as claimed in claim 6, wherein a gap is defined between the slit (17, 18) and the lower part of the air duct assembly (12), and a separate air duct element (16) is mounted in the gap between the air duct assembly (12) and the slit (17, 18).

8. Vehicle as claimed in claim 7, wherein the separate air duct element (16) is shaped as an open box and comprises an internal partition wall (42) separating a first air duct portion (14a) from a second air duct portion (15a), and comprises an intake opening (41) merging into the second air duct (15), the first and second air ducts (14, 15) being at least partly formed respectively by the first air duct portion (14a) and the second air duct portion (15a).

9. Vehicle as claimed in claim 8, wherein the intake opening (41) comprises a frame arranged to support air filtering means.

10. Vehicle as claimed in claims 7 to 9, wherein the separate air duct element (16) is attached to the floor wall (5) of the cabin (1) remaining free for lateral movement relative to the air duct assembly (12) for enabling compensation of tolerances between the air duct assembly (12) and the floor of the cabin (1).

11. Vehicle as claimed in claims 5 to 10, wherein the first air duct (14) is configured so as to be coupled to fresh air intake means (6) of the tractor for ducting fresh air from outside of the cabin (1) to the air processing unit (2), and the second air duct (15) is configured for ducting recirculation air from inside the cabin (1) to the air processing unit (2).

12. Vehicle as claimed in claims 1 to 11, wherein it comprises a three positions flap door (19) mounted between the output of the air duct assembly (12) and the input of the air processing unit (2) for controlling the air supplied in the cabin (1) by selecting an only fresh air supply mode, an only recirculation air supply mode, or a mixed air supply mode, the three position flap door (19) being coupled between the output of the air duct assembly (12) and the input of the air processing unit (2).

13. Vehicle as claimed in claims 1 to 12, wherein the module (13) is arranged as a rear module at the rear of the cabin (1).

14. Preassembled module adapted to be mounted in the cabin (1) of a vehicle as defined in any preceding claim, said module comprising an air duct assembly (12), supporting means for electronic devices (40) and supporting means enabling a pivotal mounting of said module in said cabin (1).

## Patentansprüche

1. Fahrzeug, beispielsweise ein Landtraktor, das eine Kabine (1) mit einem Heizungs-, Belüftungs- und Klimatisierungssystem aufweist, wobei die Kabine (1) eine Luftkanalanordnung (12) mit mindestens einem ersten Luftkanal (14), der dazu konfiguriert ist, mit dem Einlass einer Luftaufbereitungseinheit (2) des Heizungs-, Belüftungs- und Klimatisierungssystems gekoppelt zu werden, und Stützmittel zum Anbringen von elektronischen Vorrichtungen (40) umfasst, wobei die Luftkanalanordnung (12) und die Stützmittel zusammen vormontiert sind, so dass sie ein einziges Modul (13) bilden, **dadurch gekennzeichnet, dass** das Modul (13) zwei Seitenflansche (35) mit Schwenkbefestigungsmitteln umfasst.

2. Fahrzeug nach Anspruch 1, wobei die Stützmittel zwei im Wesentlichen flache Abschnitte (30) zum Anbringen der elektronischen Vorrichtungen (40) umfassen, die auf beiden Seiten der Luftkanalanordnung (12) angeordnet sind.

3. Fahrzeug nach Anspruch 1 oder 2, wobei jedes Schwenkbefestigungsmittel eine Stützgabel (36) umfasst, die dazu ausgeführt ist, mit einer in der Kabine (1) befestigten Stange (38) zusammenzuwirken.

4. Fahrzeug nach den Ansprüchen 1 bis 3, wobei die Luftkanalanordnung (12) einen zweiten Luftkanal (15) umfasst, der dazu konfiguriert ist, mit dem Einlass der Luftaufbereitungseinheit (2) gekoppelt zu werden.

5. Verfahren nach den Ansprüchen 1 bis 4, wobei das Modul (13) mindestens ein Befestigungsmittel (34) zum Befestigen des Moduls an der Kabine (1) umfasst.

6. Fahrzeug nach den Ansprüchen 1 bis 5, wobei das Modul so in der Kabine befestigt ist, dass die Luftkanalanordnung (12) zu mindestens einem Schlitz (17, 18) weist, der in einer Bodenwand (5) der Kabine (1) vorgesehen ist, wobei der Einlass der Luftaufbereitungseinheit (2) auf einer bezüglich der Luftkanalanordnung gegenüberliegenden Seite der Bodenwand (5) zu dem mindestens einen Schlitz (17, 18) weist.

7. Fahrzeug nach Anspruch 6, wobei ein Spalt zwischen dem Schlitz (17, 18) und dem unteren Teil der Luftkanalanordnung (12) definiert ist und ein getrenntes Luftkanalelement (16) in dem Spalt zwischen der Luftkanalanordnung (12) und dem Schlitz (17, 18) befestigt ist.

8. Fahrzeug nach Anspruch 7, wobei das separate Luftkanalelement (16) in Form eines offenen Kastens vorliegt und eine Innentrennwand (42) umfasst, die einen ersten Luftkanalabschnitt (14a) von einem zweiten Luftkanalabschnitt (15a) trennt, und eine Einlassöffnung (41) umfasst, die in den zweiten Luftkanal (15) übergeht, wobei der erste und zweite Luftkanal (14, 15) zumindest teilweise durch den ersten Luftkanalabschnitt (14a) bzw. den zweiten Luftkanalabschnitt (15a) gebildet werden.

9. Fahrzeug nach Anspruch 8, wobei die Einlassöffnung (41) einen Rahmen umfasst, der dazu angeordnet ist, Luftfiltermittel zu stützen.

10. Fahrzeug nach den Ansprüchen 7 bis 9, wobei das separate Luftkanalelement (16) an der Bodenwand (5) der Kabine (1) angebracht ist und sich zur Ermöglichung des Ausgleichs von Toleranzen zwischen der Luftkanalanordnung (12) und dem Boden der Kabine (1) bezüglich der Luftkanalanordnung (12) noch lateral bewegen kann.

11. Fahrzeug nach den Ansprüchen 5 bis 10, wobei der erste Luftkanal (14) dazu konfiguriert ist, zur Leitung von Frischluft von außerhalb der Kabine (1) zur Luftaufbereitungseinheit (2) mit Frischlufteinlassmitteln (6) des Traktors gekoppelt zu werden, und der zweite Luftkanal (15) dazu konfiguriert ist, Umluft vom Inneren der Kabine (1) zur Luftaufbereitungseinheit (2) zu leiten.

12. Fahrzeug nach den Ansprüchen 1 bis 11, wobei das Fahrzeug eine Klappe (19) mit drei Stellungen umfasst, die zum Steuern der der Kabine (1) zugeführten Luft durch Wählen eines Nur-Frischluft-Zufuhrmodus, eines Nur-Umluft-Zufuhrmodus oder eines Mischluft-Zufuhrmodus zwischen dem Auslass der Luftkanalanordnung (12) und dem Einlass der Luftaufbereitungseinheit (2) befestigt ist, wobei die Klappe (19) mit drei Stellungen zwischen dem Auslass der Luftkanalanordnung (12) und dem Einlass der Luftaufbereitungseinheit (2) gekoppelt ist.

13. Fahrzeug nach den Ansprüchen 1 bis 12, wobei das Modul (13) als ein Heckmodul an der Rückseite der Kabine (1) angeordnet ist.

14. Vormontiertes Modul, das dazu ausgeführt ist, in der Kabine (1) eines Fahrzeugs nach einem der vorhergehenden Ansprüche befestigt zu werden, wobei das Modul eine Luftkanalanordnung (12), Stützmittel für elektronische Vorrichtungen (40) und Stützmittel, die eine Schwenkbefestigung des Moduls in der Kabine (1) ermöglichen, umfasst.

## Revendications

1. Véhicule tel qu'un tracteur agricole ayant une cabine (1) dotée d'un système de chauffage, ventilation et climatisation, ladite cabine (1) comprenant un ensemble de conduits d'air (12) avec au moins un premier conduit d'air (14) configuré pour être couplé à l'orifice d'admission d'une unité de traitement d'air (2) du système de chauffage, ventilation et climatisation ainsi que des moyens de support servant à fixer des dispositifs électroniques (40), l'ensemble de conduits d'air (12) et les moyens de support étant préassemblés l'un avec l'autre de façon à former un module (13) unique, **caractérisé en ce que** ledit module (13) comprend deux brides latérales (35) pourvues de moyens de fixation pivotants.

2. Véhicule selon la revendication 1, dans lequel lesdits moyens de support comprennent deux parties (30) sensiblement plates servant à fixer lesdits dispositifs électroniques (40) agencés des deux côtés de l'ensemble de conduits d'air (12).

3. Véhicule selon les revendications 1 ou 2, dans lequel chaque moyen de fixation pivotant comprend une fourche de support (36) conçue pour entrer en coopération avec une tige (38) fixée dans la cabine (1).

4. Véhicule selon les revendications 1 à 3, dans lequel l'ensemble de conduits d'air (12) comprend un second conduit d'air (15) configuré pour être couplé à l'orifice d'admission de l'unité de traitement d'air (2).

5. Véhicule selon les revendications 1 à 4, dans lequel le module (13) comprend au moins un moyen de fixation (34) servant à fixer ledit module à la cabine (1).

6. Véhicule selon les revendications 1 à 5, dans lequel ledit module est fixé dans la cabine de sorte que ledit ensemble de conduits d'air (12) soit positionné en face d'au moins une fente (17, 18) prévue dans une paroi de plancher (5) de la cabine (1), l'orifice d'admission de l'unité de traitement d'air (2) étant positionné en face de ladite fente (17, 18) sur un côté de la paroi de plancher (5) opposé à celui de l'ensemble de conduits d'air.

7. Véhicule selon la revendication 6, dans lequel un intervalle est défini entre la fente (17, 18) et la partie inférieure de l'ensemble de conduits d'air (12), et dans lequel un élément séparé de conduit d'air (16) est fixé dans l'intervalle prévu entre l'ensemble de conduits d'air (12) et la fente (17, 18).

8. Véhicule selon la revendication 7, dans lequel l'élément séparé de conduit d'air (16) possède une forme de boîtier ouvert et comprend une paroi interne de séparation (42) séparant une première partie de conduit d'air (14a) d'une seconde partie de conduit d'air (15a) et comprend une ouverture d'admission (41) fusionnant avec le second conduit d'air (15), les premier et second conduits d'air (14, 15) étant au moins en partie formés respectivement par la première partie de conduit d'air (14a) et la seconde partie de conduit d'air (15a).

9. Véhicule selon la revendication 8, dans lequel l'ouverture d'admission (41) comprend un cadre agencé pour maintenir des moyens de filtrage d'air.

10. Véhicule selon les revendications 7 à 9, dans lequel l'élément séparé de conduit d'air (16) est fixé à la paroi de plancher (5) de la cabine (1) restant libre par rapport à un mouvement latéral de l'ensemble de conduits d'air (12) pour permettre de compenser des tolérances entre l'ensemble de conduits d'air (12) et le plancher de la cabine (1).

11. Véhicule selon les revendications 5 à 10, dans lequel le premier conduit d'air (14) est configuré pour être couplé à des moyens d'admission d'air frais (6) du tracteur afin de conduire l'air frais de l'extérieur de la cabine (1) vers l'unité de traitement d'air (2) et le second conduit d'air (15) est configuré pour conduire l'air en recirculation de l'intérieur de la cabine (1) vers l'unité de traitement d'air (2).

12. Véhicule selon les revendications 1 à 11, comprenant une trappe à trois positions (19) fixée entre la sortie de l'ensemble de conduits d'air (12) et l'entrée de l'unité de traitement d'air (2) pour commander l'air amené dans la cabine (1) par sélection d'un mode d'alimentation en air frais uniquement, d'un mode d'alimentation en air en recirculation uniquement ou d'un mode d'alimentation en air mixte, la trappe à trois positions (19) étant couplée entre la sortie de l'ensemble de conduits d'air (12) et l'entrée de l'unité de traitement d'air (2).

13. Véhicule selon les revendications 1 à 12, dans lequel le module (13) est agencé sous la forme d'un module arrière placé à l'arrière de la cabine (1).

14. Module préassemblé conçu pour être fixé dans la cabine (1) d'un véhicule tel que défini selon l'une quelconque des revendications précédentes, ledit module comprenant un ensemble de conduits d'air (12), des moyens de support pour dispositifs électroniques (40) ainsi que des moyens de support permettant de fixer de façon pivotante ledit module dans ladite cabine (1).
